# DEMANDE DE BREVET EUROPEEN

(11) **EP 2 930 283 A1**
(43) Date de publication de la demande: **14.10.2015**
(21) Numéro de dépôt: 15163011.8
(22) Date de dépôt: 09.04.2015
(51) Int. Cl.: E04D 13/14, H02G 3/22

(54) **CROSSE TUBULAIRE POUR LE BÂTIMENT**

(30) Priorité: 11.04.2014 FR 1453243
(71) Demandeur: Odco, 38610 Gieres (FR)
(72) Inventeur: Iftissen, Gérard, 38410 SAINT MARTIN D'URIAGE (FR)
(74) Mandataire: Casalonga

(57) **Abrégé**

Crosse tubulaire pour le bâtiment, pour le passage d'éléments allongés tels que des câbles électriques et des tuyaux, comprenant :
- une partie fixe comprenant un tube vertical (4) aménageant un passage vertical (2) et une paroi latérale (11) portée par une partie supérieure d'extrémité du tube vertical et s'étendant latéralement à ce dernier,
- et une partie mobile comprenant un capot mobile (17) monté pivotant sur la partie fixe de façon à pouvoir être pivoté entre une position abaissée de repos dans laquelle le capot recouvre un dégagement supérieur (13) formé au-dessus du passage vertical dudit tube vertical et de ladite paroi latérale, de façon à former un passage latéral (3) qui communique avec le passage vertical dudit tube vertical, et une position relevée dans laquelle ledit dégagement (13) est découvert, le capot pivotant de sa position relevée limitée à sa position abaissée de repos sous l'effet de son propre poids.

## Description

La présente invention concerne le domaine des équipements pour le bâtiment et plus particulièrement les crosses tubulaires installées sur les toits des bâtiments pour le passage de câbles ou fils électriques et de conduits de fluides en particulier pour des installations de climatisation.

Actuellement, les crosses tubulaires sont formées par des tubes pliés qui comprennent une partie verticale engagée dans un trou du toit et reliée à l'étanchéité de ce dernier et une partie inclinée vers le bas reliée à la partie verticale par un coude, la partie inclinée étant ouverte vers l'extérieur et vers le bas. Les éléments allongés sont généralement introduits de bas en haut dans la partie verticale des crosses tubulaires pour ressortir par l'extrémité ouverte de la partie inclinée. Il existe néanmoins une difficulté lorsque l'on souhaite faire passer dans les crosses tubulaires les éléments allongés relativement raides tels que des gros câbles électriques ou des conduits métalliques de fluides.

Les brevets US 2 865 981, US 3 328 513 et WO 2010/119174 décrivent des crosses tubulaires dont une partie supérieure peut être séparée d'une partie fixe lors de la mise en place des éléments allongés. Néanmoins, dans le domaine des travaux de bâtiment, il est fréquent qu'une telle partie supérieure séparable n'est pas immédiatement remontée ou ne l'est pas du tout, si bien qu'en cas de pluies, de l'eau pénètre par le conduit vertical de la partie fixe et occasionne des dégradations des bâtiments.

La présente invention a pour but de remédier aux inconvénients ci-dessus.

Il est proposé une crosse tubulaire pour le bâtiment, pour le passage d'éléments allongés tels que des câbles ou fils électriques et des tuyaux.

La crosse comprend une partie fixe comprenant au moins un tube vertical aménageant un passage vertical et une paroi latérale portée par une partie supérieure du tube vertical et s'étendant latéralement à ce dernier, un dégagement supérieur étant formé au moins en partie au-dessus dudit passage vertical dudit tube vertical et au-dessus de ladite paroi latérale.

La crosse comprend également une partie mobile comprenant au moins un capot mobile monté pivotant sur la partie fixe de façon à pouvoir être pivoté entre une position abaissée de repos dans laquelle le capot recouvre ledit dégagement supérieur, de façon à former un passage latéral qui communique avec le passage vertical dudit tube vertical et une position relevée, limitée par des moyens de butée entre la partie fixe et la partie mobile, dans laquelle ledit dégagement est découvert, le capot étant monté de façon articulée sur la partie fixe en un endroit opposé à ladite paroi latérale, de façon à pivoter de sa position relevée limitée à sa position abaissée de repos sous l'effet de son propre poids.

Ainsi, grâce à sa présence permanente et au fait qu'il peut revenir à sa position abaissée de lui-même, le capot constitue une protection simple et efficace, n'entravant pas la mise en place des câbles ou tuyaux.

Le bord du capot en position abaissée peut recouvrir le bord dudit dégagement supérieur.

La partie fixe peut comprendre une portion longitudinale d'un tube formant ladite paroi latérale et une portion d'un coude qui relie cette portion longitudinale d'un tube et l'extrémité supérieure du tube vertical, ladite portion longitudinale d'un tube et ladite portion d'un coude définissant une échancrure aménageant une ouverture vers le haut et du côté de l'extrémité libre de la portion longitudinale d'un tube et formant ledit dégagement, ledit capot en position abaissée étant apte à recouvrir cette échancrure.

Le bord de l'échancrure peut s'étendre dans un plan.

Ledit passage latéral peut être incliné vers le bas, vers son extrémité libre.

Le capot peut être articulé sur la partie fixe selon un axe perpendiculaire au plan contenant l'axe du tube vertical et celui de la paroi latérale.

Le capot et la partie fixe peuvent présenter entre eux un moyen de fixation en position abaissée.

La crosse peut comprendre une tête d'une seule pièce qui comprend au moins une portion supérieure du tube vertical et ladite paroi latérale, cette portion supérieure et une portion inférieure du tube vertical étant engagées l'une dans l'autre et reliées par un moyen de verrouillage.

La crosse peut en outre comprendre un tube télescopique engagé dans la partie inférieure du tube vertical.

Une crosse tubulaire pour le bâtiment va maintenant être décrite à titre d'exemple non limitatif et illustrée par le dessin annexé sur lequel :
- la figure 1 représente une coupe verticale de la crosse tubulaire, sa partie mobile étant en position relevée ;
- la figure 2 représente une coupe verticale de la crosse tubulaire, sa partie mobile étant en position abaissée ;
- la figure 3 représente une vue latérale de la crosse tubulaire, sa partie mobile étant en position relevée ;
- la figure 4 représente une vue de face de la crosse tubulaire, sa partie mobile étant en position relevée ;
- la figure 5 représente une vue latérale de la crosse tubulaire, sa partie mobile étant en position abaissée ;
- la figure 6 représente une coupe transversale de la crosse tubulaire, selon III-III de la figure 5, sa partie mobile étant en position abaissée ;
- la figure 7 représente une vue de face de la crosse tubulaire, sa partie mobile étant en position abaissée ; et
- la figure 8 représente une vue en perspective de la crosse tubulaire, sa partie mobile étant en position abaissée.

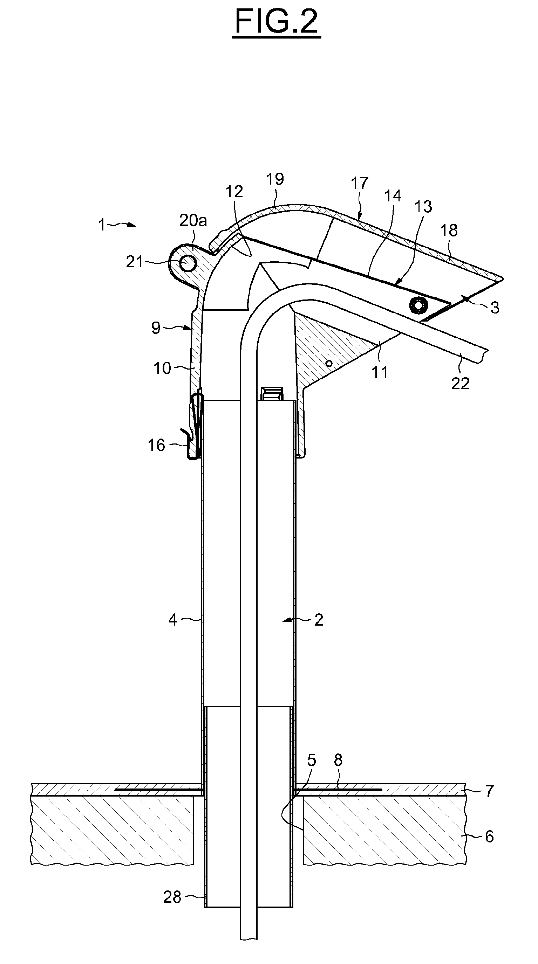

Une crosse tubulaire 1 représentée sur les figures, destinée à être installée sur une toiture d'un bâtiment, a pour but de définir, dans sa position représentée en particulier sur la figure 2, un passage vertical 2 ouvert vers le bas et un passage latéral incliné 3 communiquant avec l'extrémité supérieure du passage vertical 2 par un passage coudé, le passage latéral 3 étant ouvert latéralement vers l'extérieur.

La crosse tubulaire 1 présente une partie fixe qui comprend un tube vertical 4 par exemple métallique, de section circulaire, dont l'extrémité inférieure s'étend au-dessus d'un passage vertical 5 d'une toiture 6 d'un bâtiment, en particulier une toiture-terrasse munie d'une couche supérieure d'étanchéité 7 reliée au tube vertical 4. Par exemple, le tube vertical 4 est muni d'une membrane périphérique 8 d'étanchéité accolée à la couche d'étanchéité 7.

La partie fixe de la crosse tubulaire 1 comprend en outre une tête 9 qui est accouplée sur la partie supérieure du tube vertical 4.

La tête 9 comprend un tube vertical 10, de section circulaire, dont la partie inférieure reçoit la partie supérieure du tube vertical 4 et qui forme avec ce dernier le passage vertical 2 précité.

La tête 9 comprend en outre une paroi latérale 11 qui est formée par une portion longitudinale d'un tube, par exemple approximativement demi-circulaire, et qui est reliée à l'extrémité supérieure du tube vertical 10 par l'intermédiaire d'une portion coudée 12 de section circulaire, la portion longitudinale d'un tube formant la paroi latérale 11 étant inclinée vers le bas depuis la portion coudée 12, par exemple d'un angle compris entre dix et trente degrés. L'extrémité libre de la paroi latérale 11 est coupée en dévers.

La paroi latérale 11 formée par une portion longitudinale d'un tube et la portion coudée 12 définissent un dégagement supérieur 13 ouvert vers le haut et ouvert du côté de l'extrémité libre de la paroi latérale 11, ce dégagement supérieur 13 étant formé au-dessus de la paroi latérale 11 formée par la portion longitudinale d'un tube et au-dessus d'au moins une partie du passage vertical 2. Ainsi, le dégagement supérieur 13 se présente sous la forme d'une échancrure 14. Par exemple, la portion longitudinale d'un tube formant la paroi latérale 11 peut s'apparenter à une gouttière, le bord de l'échancrure 14 s'étendant par exemple dans un plan incliné.

La tête 9 peut être fixée sur le tube vertical 4 par l'intermédiaire d'agrafes 16 d'anti-arrachement, par exemple au nombre de trois. Ces agrafes 16 peuvent être en une matière élastique, par exemple en un acier à ressort, et se présentent sous la forme de lames qui comprennent deux parties en forme de U opposées dans lesquelles sont engagés le bord supérieur du tube 4 et le bord inférieur du tube vertical 10 et une branche commune passant entre ces bords. Ces agrafes 16 permettent le montage axial de la tête 9 sur le tube 4 et s'opposent à son enlèvement, sauf à l'aide d'un outil adapté, mais autorisent la rotation de la tête 9 sur le tube vertical 10 afin de régler l'orientation de la paroi latérale 11 autour de ce tube vertical 10.

Par exemple, la tête 9 peut être d'une seule pièce, en une matière métallique moulée.

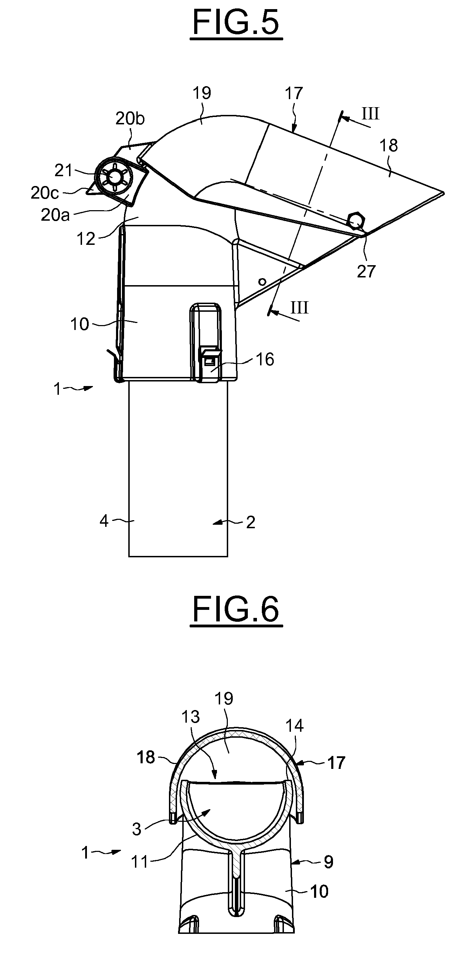

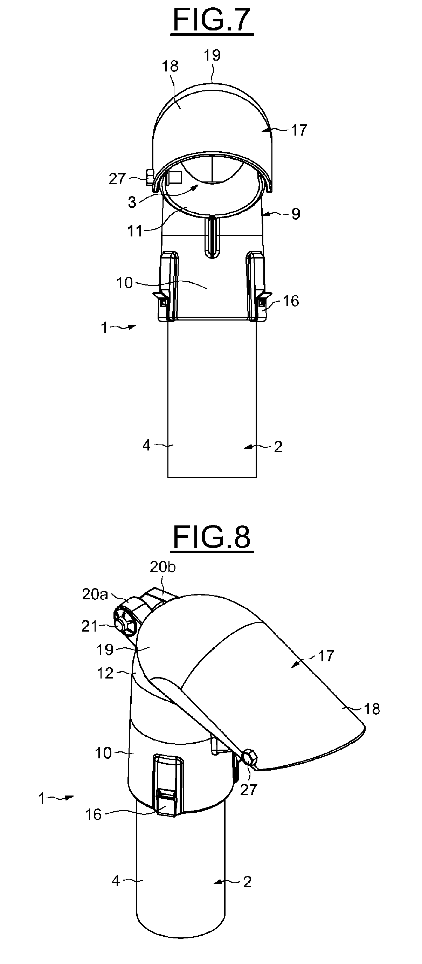

La crosse tubulaire 1 présente en outre une partie mobile qui comprend un capot pivotant 17 apte à occuper une position abaissée de repos (figures 2, 5 à 8), dans laquelle il recouvre complètement le dégagement supérieur 13 formé par l'échancrure 14, en formant et fermant le passage latéral 3. Dans cette position abaissée, le capot 17 déborde légèrement, vers le bas, sur les faces ou flancs extérieurs de la portion longitudinale d'un tube formant la paroi latérale 11 et de la portion coudée 12 (figure 6) de façon que le bord de l'échancrure 14 soit recouvert.

Par exemple, le capot pivotant 17 comprend une portion longitudinale d'un tube 18 et une portion d'un coude 19, ouvertes vers le bas et substantiellement complémentaires de la portion longitudinale de tube formant la paroi latérale 11 et de la portion de coude 12, de façon que, dans ladite position abaissée de repos, le passage latéral 3 présente une section substantiellement circulaire. L'extrémité libre du capot pivotant 11 est également coupée en dévers, substantiellement dans le même plan que le plan d'extrémité de la paroi latérale 11.

Le capot pivotant 17 est monté de manière articulée sur la tête 9 en un endroit opposé de l'extrémité libre de la paroi latérale 11. Par exemple, la portion coudée 12 de la tête 9 et la portion coudée 19 du capot 17 sont munies d'oreilles adjacentes 20a et 20b traversées par un axe d'articulation 21 s'étendant perpendiculairement au plan contenant l'axe du passage vertical 2 et l'axe du passage latéral 3.

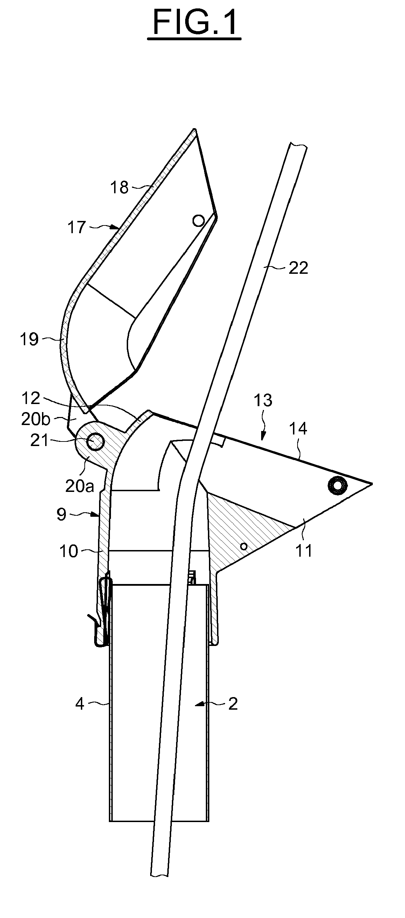

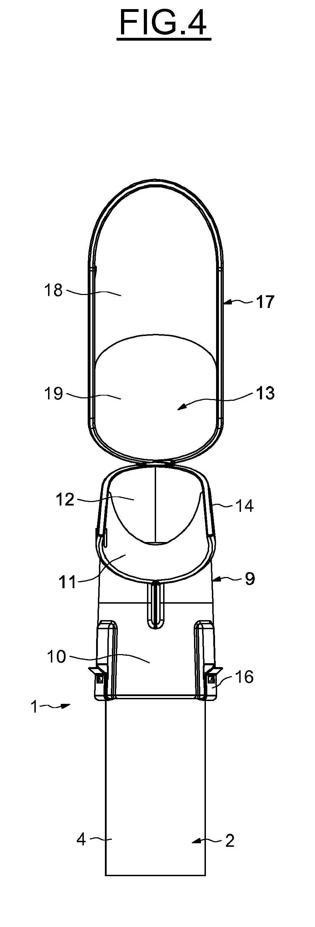

Ainsi, le capot pivotant 17 peut pivoter entre ladite position abaissée et une position relevée limitée (figures 1, 3 et 4), dans laquelle il s'étend vers le haut et dans laquelle le dégagement supérieur 13 formé par l'échancrure 14 est découvert. Dans sa position relevée, limité par un appendice 20c de l'oreille 20b venant en butée contre la tête 9, le capot pivotant 17 est légèrement incliné vers l'ouverture supérieure 13 de façon qu'il puisse passer de sa position relevée à sa position abaissée sous l'effet de son propre poids.

L'existence du capot pivotant 17 permet de faciliter la mise en place et le passage d'éléments allongés présentant une certaine raideur.

En effet, pour mettre en place un élément allongé 22, depuis l'extérieur du bâtiment, on relève le capot pivotant 17 et on fait passer cet élément allongé 22 dans le passage vertical 2 (figure 1). Puis, on plie l'élément allongé 22 vers la paroi latérale 11 et on ramène le capot pivotant 17 à sa position abaissée ou on le laisse reprendre cette position sous l'effet de son propre poids. L'élément allongé 22 s'étend alors aussi au travers du passage latéral 3 (figure 2).

Pour mettre en place un élément allongé 22, depuis l'intérieur du bâtiment, on fait passer vers le haut cet élément allongé 22 dans le passage vertical 2. Lorsqu'il le rencontre, l'élément allongé 22 pousse vers le haut le capot pivotant 17 vers sa position relevée. Puis, on plie l'élément allongé 22 vers la paroi latérale 11 et on le laisse le capot pivotant 17 reprendre sa position abaissée sous l'effet de son propre poids, sans aucune intervention.

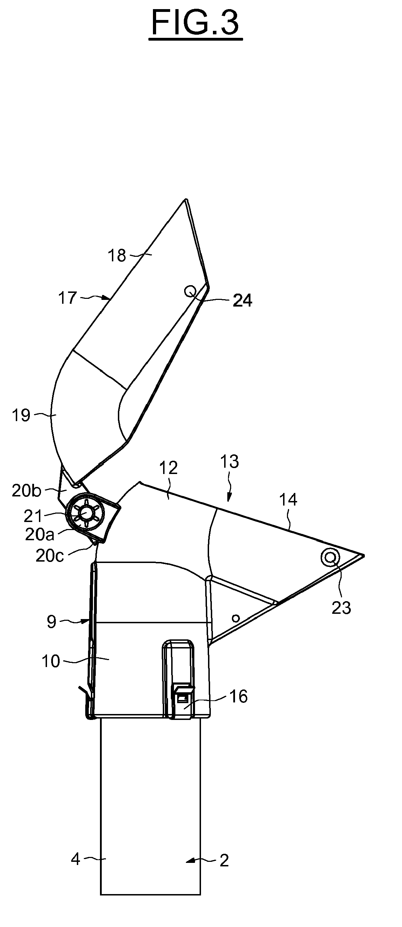

Les parties d'extrémité de la paroi latérale 11 et du capot pivotant 17 peuvent présenter des orifices 23 et 24 (figure 5) qui, dans ladite position abaissée du capot pivotant 17, se correspondent, de façon à pouvoir mettre en place un moyen de verrouillage, par exemple un cadenas, un boulon ou une vis 25 (figures 3, 5, 7 et 8).

Dans sa position abaissée, le capot 17 est adapté à la tête 9 pour que l'eau de pluie ne pénètre pas dans le passage vertical 2. Néanmoins, un joint d'étanchéité pourrait être interposé entre le capot 17 et la tête 9, par exemple le long du bord de l'échancrure 14.

Selon une variante de réalisation, la membrane 8 peut être montée sur l'extrémité inférieure du tube 4 grâce à des bagues munies de collerettes de pincement, par exemple selon un moyen de montage décrit dans le brevet européen publié sous le n° 1 710 365.

Comme illustré sur la figure 2, la crosse 1 peut comprendre en outre un tube télescopique de raidissement 28 engagé dans la partie inférieure du tube 4. Ce tube de raidissement 28 s'étend vers le bas dans le trou 5 de la toiture 6 et est réglable en hauteur par rapport au tube 4 de façon à pouvoir être adapté à l'épaisseur de la toiture 8. Ainsi, le tube de raidissement 28 contribue au maintien du tube 4 de la crosse 1 en position verticale. A ses extrémités supérieure et inférieure, le tube de raidissement 28 peut présenter des déformations vers l'extérieur, de fin de course, pouvant venir en butée contre une bague intérieure du moyen de montage mentionné ci-dessus afin d'empêcher le tube 28 de sortir complétement du tube 4 et de rentrer complètement dans ce tube 4.

Selon une variante de réalisation, la paroi latérale 11 pourrait être formée par une plaque latérale inclinée, fixée sur le tube vertical 4 ou sur le tube 10, le capot pivotant 17 étant formé de façon à recouvrir cette plaque latérale et à recouvrir l'extrémité supérieure du tube 4 ou du tube 10.

La présente invention ne se limite pas à l'exemple ci-dessus décrit. Des variantes de réalisations sont possibles sans sortir du cadre de l'invention.

## Revendications

1. Crosse tubulaire pour le bâtiment, pour le passage d'éléments allongés tels que des câbles ou fils électriques et des tuyaux, comprenant :
- une partie fixe comprenant au moins un tube vertical (4) aménageant un passage vertical (2) et une paroi latérale (11) portée par une partie supérieure du tube vertical et s'étendant latéralement à ce dernier, un dégagement supérieur (13) étant formé au moins en partie au-dessus dudit passage vertical dudit tube vertical et au-dessus de ladite paroi latérale,
- et une partie mobile comprenant au moins un capot mobile (17) monté pivotant sur la partie fixe de façon à pouvoir être pivoté entre une position abaissée de repos dans laquelle le capot recouvre ledit dégagement supérieur (13), de façon à former un passage latéral (3) qui communique avec le passage vertical dudit tube vertical, et une position relevée, limitée par des moyens de butée entre la partie fixe et la partie mobile, dans laquelle ledit dégagement (13) est découvert, le capot étant monté de façon articulée (21) sur la partie fixe en un endroit opposé à ladite paroi latérale (11), de façon à pivoter de sa position relevée limitée à sa position abaissée de repos sous l'effet de son propre poids.

2. Crosse selon la revendication 1, dans laquelle le bord du capot (17) en position abaissée recouvre le bord dudit dégagement supérieur (13).

3. Crosse selon l'une des revendications 1 et 2, dans laquelle la partie fixe comprend une portion longitudinale d'un tube formant ladite paroi latérale (11) et une portion d'un coude (12) qui relie cette portion longitudinale d'un tube et l'extrémité supérieure du tube vertical, ladite portion longitudinale d'un tube et ladite portion d'un coude définissant une échancrure (14) aménageant une ouverture vers le haut et du côté de l'extrémité libre de la portion longitudinale d'un tube et formant ledit dégagement, ledit capot en position abaissée étant apte à recouvrir cette échancrure.

4. Crosse selon la revendication 3, dans laquelle le bord de l'échancrure (14) s'étend dans un plan.

5. Crosse selon l'une quelconque des revendications précédentes, dans laquelle ledit passage latéral (3) est incliné vers le bas, vers son extrémité libre.

6. Crosse selon l'une quelconque des revendications précédentes, dans laquelle le capot est articulé sur la partie fixe selon un axe (21) perpendiculaire au plan contenant l'axe du tube vertical et celui de la paroi latérale.

7. Crosse selon l'une quelconque des revendications précédentes, dans laquelle le capot et la partie fixe présentent entre eux un moyen de fixation en position abaissée (27).

8. Crosse selon l'une quelconque des revendications précédentes, comprenant une tête (9) d'une seule pièce qui comprend au moins une portion supérieure du tube vertical (10) et ladite paroi latérale (11), cette portion supérieure et une portion inférieure du tube vertical étant engagées l'une dans l'autre et reliées par un moyen de verrouillage.

9. Crosse selon l'une quelconque des revendications précédentes, comprenant un tube télescopique (28) engagé dans la partie inférieure du tube vertical (4).
